# EUROPEAN PATENT APPLICATION

(11) **EP 4 644 886 A1**
(43) Date of publication of application: **05.11.2025**
(21) Application number: 23910837.6
(22) Date of filing: 28.12.2023
(51) Int. Cl.: G01N 23/046

(54) **CT SCANNING APPARATUS**

(30) Priority: 30.12.2022 CN 202211742815
(71) Applicant: NUCTECH COMPANY LIMITED, Beijing 100084 (CN); Tsinghua University, Haidian District, Beijing 100084 (CN)
(72) Inventor: CHEN, Zhiqiang, Beijing 100084 (CN); ZHANG, Li, Beijing 100084 (CN); LI, Yuanjing, Beijing 100084 (CN); HUANG, Qingping, Beijing 100084 (CN); LI, Guipei, Beijing 100084 (CN); HONG, Mingzhi, Beijing 100084 (CN); ZHANG, Liguo, Beijing 100084 (CN); FENG, Bo, Beijing 100084 (CN)
(74) Representative: Cabinet Beau de Loménie
(86) International application number: PCT/CN2023/142800
(87) International publication number: WO 2024/140921

(57) **Abstract**

A CT machine is provided, including: a first frame; a plurality of supporting devices on the first frame; a rotatable portion capable of rotating around a rotation axis when driven by a driving wheel, and the rotatable portion being jointly supported by the plurality of supporting devices during rotation; a scanning device comprising a ray source and a detector, the ray source and the detector being both arranged on the rotatable portion; and an axial limiting mechanism for limiting movements of the rotatable portion along a first direction and a second direction, the first direction and the second direction being both parallel to the rotation axis, and the first direction being opposite to the second direction. The plurality of supporting devices are further configured to limit a movement of the rotatable portion along a first radial direction, the CT machine further comprises a radial limiting mechanism on the first frame, the radial limiting mechanism is configured to limit a movement of the rotatable portion along a second radial direction, the first radial direction and the second radial direction are both parallel to the radial direction of the rotatable portion and opposite to each other.

## Description

### Related Application

The present application claims the priority benefit of Chinese Patent Application No. 202211742815.8 filed on December 30, 2022, the entire disclosure of which is incorporated herein by reference.

### TECHNICAL FIELD

The present application relates to the field of radiation inspection technology, and more particularly to a CT machine.

### BACKGROUND

CT technology plays an important role in security inspection because it can eliminate the influence of object overlapping. CT machines are also widely used in technical fields such as item detection. CT machines can not only detect smaller items such as luggage and flight cases, but also larger items such as containers and vehicles.

In the related art, a CT machine includes a slip ring device and obtains projection data at different angles through the rotation of an X-ray machine and a detector, and then obtains tomographic images by means of reconstruction methods, thereby obtaining internal information of the detected luggage items. With dual-energy or multi-energy imaging technology, current luggage inspection devices can reconstruct the atomic number and electron density of an inspected substance, which realizes identification of the substance category, and has a good effect in the detection of explosives, dangerous goods, etc.

The above information disclosed is only for understanding the background of the technical concept of the present disclosure and therefore, the above information may contain information that does not constitute the prior art.

### SUMMARY

An aspect of the present disclosure provides a CT machine comprising: a first frame; a plurality of supporting devices arranged on the first frame, each supporting device of the supporting devices comprising a plurality of rotating wheels, at least one rotating wheel of at least one supporting device serving as a driving wheel; a rotatable portion capable of rotating around a rotation axis when driven by the driving wheel, and the rotatable portion being jointly supported by the plurality of supporting devices during rotation of the rotatable portion; a scanning device comprising a ray source and a detector, the ray source and the detector being both arranged on the rotatable portion, and the ray source and the detector being arranged oppositely along a radial direction of the rotatable portion; and an axial limiting mechanism for limiting movements of the rotatable portion along a first direction and a second direction, the first direction and the second direction being both parallel to the rotation axis, and the first direction being opposite to the second direction. The plurality of supporting devices are further configured to limit a movement of the rotatable portion along a first radial direction, the CT machine further comprises a radial limiting mechanism arranged on the first frame, the radial limiting mechanism is configured to limit a movement of the rotatable portion along a second radial direction, the first radial direction and the second radial direction are both parallel to the radial direction of the rotatable portion and opposite to each other.

In some exemplary embodiments of the present disclosure, the axial limiting mechanism comprises: a first axial limiting device for limiting a movement of the rotatable portion along the first direction; and a second axial limiting device for limiting a movement of the rotatable portion along the second direction.

In some exemplary embodiments of the present disclosure, the rotatable portion comprises a rotatable body and at least one rotatable track, the scanning device is arranged on the rotatable body, and the first axial limiting device and the second axial limiting device are arranged on two sides of the at least one rotatable track respectively in a direction parallel to the rotation axis.

In some exemplary embodiments of the present disclosure, the rotatable portion comprises two rotatable tracks, the rotatable body is sandwiched between the two rotatable tracks in a direction parallel to the rotation axis of the rotatable portion, and in a direction parallel to the rotation axis, the first axial limiting device is arranged on a side of one rotatable track of the two rotatable tracks facing away from the rotatable body, and the second axial limiting device is arranged on a side of the other rotatable track of the two rotatable tracks facing away from the rotatable body.

In some exemplary embodiments of the present disclosure, the rotatable portion comprises two rotatable tracks, the rotatable body is sandwiched between the two rotatable tracks in a direction parallel to the rotation axis of the rotatable portion, and the first axial limiting device and the second axial limiting device are arranged on two sides of a same rotatable track of the two rotatable tracks respectively in a direction parallel to the rotation axis.

In some exemplary embodiments of the present disclosure, the first axial limiting device comprises an axial pressure roller, and the axial pressure roller is arranged close to an end face of one of the at least one rotatable track facing the first direction.

In some exemplary embodiments of the present disclosure, the second axial limiting device comprises an eccentric axial pressure roller, and the eccentric axial pressure roller is arranged close to an end face of another rotatable track of the at least one rotatable track facing the second direction.

In some exemplary embodiments of the present disclosure, the first axial limiting device comprises an axial pressure roller, the second axial limiting device comprises an eccentric axial pressure roller, and the axial pressure roller and the eccentric axial pressure roller are arranged close to an end face facing the first direction and an end face facing the second direction of a same rotatable track of the at least one rotatable track, respectively.

In some exemplary embodiments of the present disclosure, during rotation of the axial pressure roller, a minimum distance along the first direction between an outer circumferential surface of the axial pressure roller and the end face of the rotatable track facing the first direction remains unchanged.

In some exemplary embodiments of the present disclosure, during rotation of the eccentric axial pressure roller, a minimum distance along the second direction between an outer circumferential surface of the eccentric axial pressure roller and the end face of the rotatable track facing the second direction is variable.

In some exemplary embodiments of the present disclosure, the axial pressure roller comprises a roller seat, a roller axle, a roller bearing and a first pressure roller element, the roller seat is fixedly connected to the first frame, the roller axle is arranged on the roller seat, the first pressure roller element is arranged on the roller axle through the roller bearing, a central axis of the first pressure roller element coincides with a central axis of the roller axle, the first pressure roller element is capable of rotating on the roller axle, and at least a part of an outer circumferential surface of the first pressure roller element faces the end face of the rotatable track facing the first direction.

In some exemplary embodiments of the present disclosure, the eccentric axial pressure roller comprises a roller seat, a roller axle, a roller bearing and a second pressure roller element, the roller seat is fixedly connected to the first frame, the roller axle is arranged on the roller seat, the second pressure roller element is arranged on the roller axle through the roller bearing, there is an eccentricity between a central axis of the second pressure roller element and a central axis of the roller axle, the second pressure roller element is capable of rotating eccentrically on the roller axle, and at least a part of an outer circumferential surface of the second pressure roller element faces the end face of the rotatable track facing the second direction.

In some exemplary embodiments of the present disclosure, the axial pressure roller and the eccentric axial pressure roller share a roller seat, the axial pressure roller and the eccentric axial pressure roller constitute a pressure roller group.

In some exemplary embodiments of the present disclosure, the rotatable portion comprises a rotatable body and at least one rotatable track, the scanning device is arranged on the rotatable body, and the at least one rotatable track is an annular track, and the radial limiting mechanism faces an inner circumferential surface of the annular track.

In some exemplary embodiments of the present disclosure, the radial limiting mechanism comprises a radially eccentric pressure roller capable of rotation, and during rotation of the radially eccentric pressure roller, a minimum distance along the second radial direction between an outer circumferential surface of the radially eccentric pressure roller and an inner circumferential surface of the rotatable track is variable.

In some exemplary embodiments of the present disclosure, the radially eccentric pressure roller comprises a roller seat, a roller axle, a roller bearing and a first radial pressure roller element, the roller seat is fixedly connected to the first frame, the roller axle is arranged on the roller seat, the first radial pressure roller element is arranged on the roller axle through the roller bearing, there is an eccentricity between a central axis of the first radial pressure roller element and a central axis of the roller axle, the first radial pressure roller element is capable of rotating eccentrically on the roller axle, and at least a part of an outer circumferential surface of the first radial pressure roller element faces the inner circumferential surface of the rotatable track.

In some exemplary embodiments of the present disclosure, the radially eccentric pressure roller comprises two roller axles, two roller bearings and two first radial pressure roller elements, and central axes of the two roller axles are substantially located at a same horizontal height.

In some exemplary embodiments of the present disclosure, at least one supporting device of the plurality of supporting devices comprises a pivotable arm, a pivot, a driving motor and at least two rotating wheels, the pivotable arm is pivotally connected to the first frame through the pivot, the at least two rotating wheels are arranged on the pivotable arm and located on two sides of a pivot axis of the pivotable arm respectively, and at least one of the at least two rotating wheels is a driving wheel, the driving motor is directly connected to the driving wheel, the driving wheel is capable of driving the rotatable portion to rotate around the rotation axis, the driving motor comprises a power output shaft parallel to the pivot.

In some exemplary embodiments of the present disclosure, the at least one supporting device of the plurality of supporting devices comprises two rotating wheels, and orthographic projections of the pivot axis of the pivotable arm and respective rotation axes of the two rotating wheels on a first plane are substantially located on a same straight line, wherein the first plane is a plane perpendicular to the rotation axis of the rotatable portion.

In some exemplary embodiments of the present disclosure, the at least one supporting device of the plurality of supporting devices further comprises a first bearing, a second bearing and a third bearing, the pivot is connected to the first frame, the pivotable arm is connected to the pivot through the first bearing, and the two rotating wheels are connected to the pivotable arm through the second bearing and the third bearing respectively.

In some exemplary embodiments of the present disclosure, the driving wheel is sleeved on the power output shaft, and two third bearings are sleeved on the power output shaft and located on two sides of the driving wheel respectively.

In some exemplary embodiments of the present disclosure, an orthographic projection of the driving motor on the first plane falls within an orthographic projection of the pivotable arm on the first plane.

In some exemplary embodiments of the present disclosure, at least one supporting device of the plurality of supporting devices comprises a pivotable arm, a pivot and at least two rotating wheels, the pivotable arm is pivotally connected to the first frame through the pivot, the at least two rotating wheels are arranged on the pivotable arm and located on two sides of a pivot axis of the pivotable arm respectively, the at least two rotating wheels are driven wheels, and the rotatable portion is capable of applying a friction force to the driven wheels during rotation to drive the driven wheels to rotate.

In some exemplary embodiments of the present disclosure, the rotatable portion comprises a rotatable body and at least one rotatable track, the scanning device is arranged on the rotatable body, and each supporting device is at least partially in contact with the at least one rotatable track.

In some exemplary embodiments of the present disclosure, the rotatable portion comprises two rotatable tracks, and the rotatable body is sandwiched between the two rotatable tracks in a direction parallel to the rotation axis of the rotatable portion.

In some exemplary embodiments of the present disclosure, each rotatable track corresponds to two supporting devices, and the two supporting devices are symmetrically arranged on two sides of the rotation axis of the rotatable track.

In some exemplary embodiments of the present disclosure, the CT machine further comprises: a second frame arranged opposite to the first frame; and a magnetic device arranged on at least one of the first frame and the second frame. The magnetic device is configured to provide a magnetic force to the rotatable portion when the rotatable portion rotates, and at least some component force of the magnetic force is opposite to a direction of a gravity of the rotatable portion.

In some exemplary embodiments of the present disclosure, the magnetic device is arranged on the second frame, and the magnetic device is configured to provide a magnetic attraction force to the rotatable portion when the rotatable portion rotates.

In some exemplary embodiments of the present disclosure, the magnetic device comprises a plurality of permanent magnets or electromagnets, and the plurality of permanent magnets or electromagnets are arranged on the second frame in a spaced manner along a rotation direction of the rotatable portion.

In some exemplary embodiments of the present disclosure, the rotatable portion comprises a rotatable body and at least one rotatable track, the scanning device is arranged on the rotatable body, and the rotatable track comprises a magnetic material, or a magnetic portion composed of a magnetic material is provided on an outer circumferential surface of the rotatable track.

Additional aspects and advantages of the present disclosure will be partially provided in the description below, partially become apparent from the description below, or be understood by practicing the present disclosure.

### BRIEF DESCRIPTION OF DRAWINGS

For a more complete understanding of the present disclosure and its advantages, reference will now be made to the description below in conjunction with the accompanying drawings, in which:
FIG. 1 schematically illustrates a cantilever installation state of a CT imaging system in a CT machine in the related art;
FIG. 2 is a front view of a CT machine according to some exemplary embodiments of the present disclosure;
FIG. 3 is a side view of a CT machine according to some exemplary embodiments of the present disclosure;
FIG. 4A is an enlarged view of a supporting device of a CT machine according to some exemplary embodiments of the present disclosure;
FIG. 4B is a side view of the supporting device shown in FIG. 4A;
FIG. 5A is an enlarged view of a supporting device of a CT machine according to some exemplary embodiments of the present disclosure, at least one rotating wheel included in the supporting device serves as a driving wheel;
FIG. 5B is a side view of the supporting device shown in FIG. 5A;
FIG. 6A is a partial enlarged view of an axial limiting mechanism of a CT machine according to some exemplary embodiments of the present disclosure;
FIG. 6B is a partial enlarged view of an axial limiting mechanism of a CT machine according to other exemplary embodiments of the present disclosure;
FIG. 6C is a partial enlarged view of the axial limiting mechanism of a CT machine according to further exemplary embodiments of the present disclosure;
FIG. 7A is a partial enlarged view of a radial limiting mechanism of a CT machine according to some exemplary embodiments of the present disclosure;
FIG. 7B is a side view of the radial limiting mechanism shown in FIG. 7A;
FIG. 8A is a front view of a CT machine according to other exemplary embodiments of the present disclosure;
FIG. 8B is a side view of a CT machine according to other exemplary embodiments of the present disclosure;
FIG. 9A schematically illustrates an installation state of a scanning device in a CT machine according to an embodiment of the present disclosure; and
FIG. 9B schematically illustrates a relative position of a scanning device in a CT machine according to an embodiment of the present disclosure.

### DETAILED DESCRIPTION OF EMBODIMENTS

Hereinafter, embodiments of the disclosure will be described with reference to the accompanying drawings. However, it should be understood that these descriptions are exemplary only and are not intended to limit the scope of the present disclosure. Furthermore, in the description below, descriptions of well-known structures and technologies are omitted to avoid unnecessary confusion of the concepts of the present disclosure. In addition, various embodiments provided below in the present disclosure and the technical features in the embodiments can be combined with each other in any manner.

The terms used herein are only for describing specific embodiments and are not intended to limit the present disclosure. In addition, the terms "including", "comprising", etc. used herein indicate the presence of the features, steps, operations and/or components, but do not exclude the presence or addition of one or more other features, steps, operations or components. All terms (including technical and scientific terms) used herein have the meanings commonly understood by those skilled in the art, unless otherwise defined. It should be noted that the terms used here should be interpreted as having meanings consistent with the context of this specification and should not be interpreted in an idealized or overly rigid manner.

In the description of the disclosure, it should be understood that orientations or positional relationships indicated by the terms "center", "longitudinal", "lateral", "length", "width", "thickness", "up", "down", "front", "back", "left", "right", "vertical", "horizontal", "top", "bottom", "inside", "outside", "clockwise", "counterclockwise", "axial", "radial", "circumferential" and the like are based on the orientations or positional relationships illustrated in the drawings, and are only for the convenience of describing the present disclosure and simplifying the description, rather than indicating or implying that the device or element referred to must have a specific orientation, be constructed and operated in a specific orientation, and therefore cannot be understood as limitations on the present disclosure. In addition, a feature defined with "first" and "second" may explicitly or implicitly that one or more such features are present. In the description of the present disclosure, unless otherwise specified, "multiple" means two or more.

In the description of the present disclosure, it should be noted that, unless otherwise clearly specified and defined, the terms "installation", "couple" and "connect" should be understood in a broad sense, for example, it may be a fixed connection, a detachable connection, or an integral connection; it may be a mechanical connection or an electrical connection; it may be a direct connection or an indirect connection through an intermediate medium; it may be an internal communication between two components. For those ordinarily skilled in the art, specific meanings of the above terms in the disclosure can be understood in specific circumstances. The term "direct connection" means a connection between two components without other intermediate components.

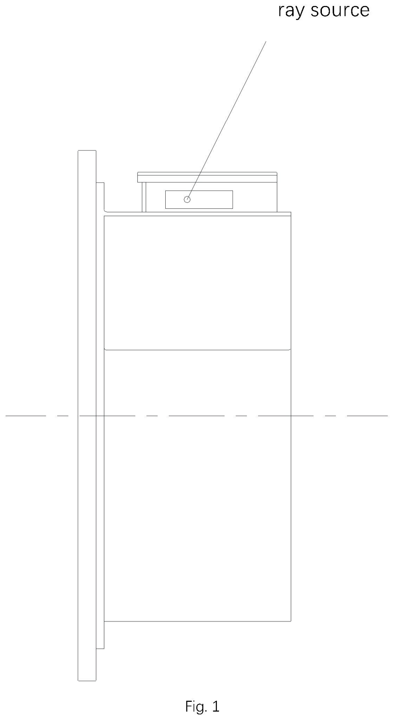

In the related art, a CT machine mainly employs a single large bearing as a rotary support, the entire CT imaging system is installed on the large bearing, and the CT imaging system is driven to rotate by a motor and a poly V-belt. For this type of CT machine, the large bearing serves as a key supporting component, which is not easy to repair after damage, and replacing the bearing requires a large workload. Due to structural factors, it is inconvenient to repair and replace the components of the imaging system. The poly V-belt is a key component in the transmission system. Since the bearing is sleeved outside the poly V-belt, it is not easy to replace after damage, and excessive tension of the poly V-belt easily leads to a failure in the transmission system. FIG. 1 illustrates a cantilever installation state of a CT imaging system in a CT machine in the related art. As shown in FIG. 1, the CT imaging system is installed in a cantilevered state. The CT imaging system usually comprises multiple components such as a ray source and a detector. The entire CT imaging system applies a tilting moment to the bearing. As a result, such a cantilevered configuration not only affects the service life of the bearing, but also needs to strengthen the rigidity of the CT imaging system.

An embodiment of the present disclosure proposes a CT machine, which has advantages of easy maintenance, compact structure and light weight.

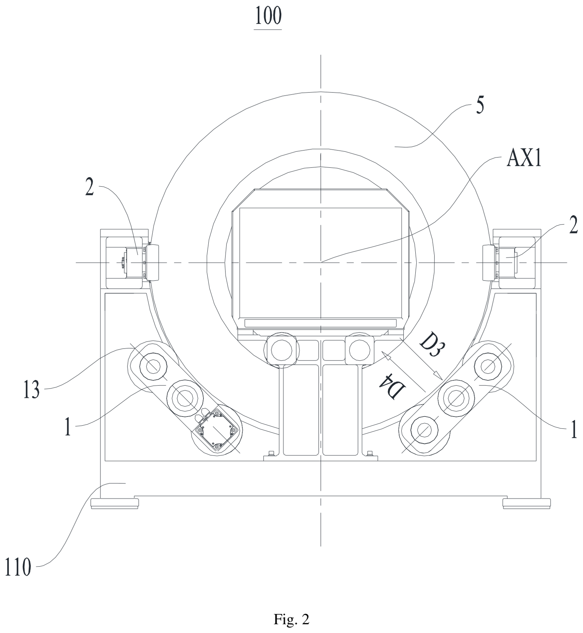

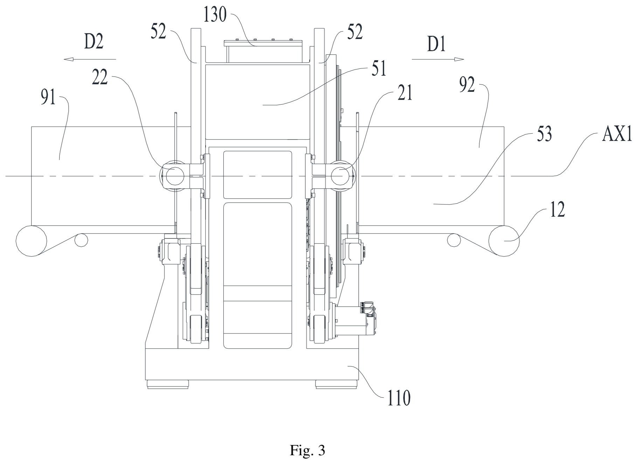

FIG. 2 is a front view of a CT machine according to some exemplary embodiments of the disclosure, and FIG. 3 is a side view of a CT machine according to some exemplary embodiments of the present disclosure. With reference to FIG. 2 and FIG. 3, a CT machine 100 according to some exemplary embodiments of the disclosure may comprise: a first frame 110; a plurality of supporting devices 1 arranged on the first frame 110; a rotatable portion 5 capable of rotating around a rotation axis AX1, and during rotation of the rotatable portion 5, the rotatable portion 5 is jointly supported by the plurality of supporting devices 1; a scanning device, for example, the scanning device may include a ray source 130 and a detector 140, both of which are arranged on the rotatable portion 5, and the ray source 130 and the detector 140 are arranged opposite to each other along a radial direction of the rotatable portion. In the embodiment of the present disclosure, the ray source 130 and the detector 140 are driven by the same rotatable portion 5 to rotate, so the rotation synchronization is easier to achieve.

For example, the scanning device is used to scan an object to be inspected. The ray source 130 is used to generate X-rays that penetrate the object to be inspected, which may include an X-ray machine or an accelerator. The detector 140 is used to receive X-rays that have passed through the object to be inspected, and convert the received X-rays into electrical signals that can be recorded, so that the imaging device of the CT machines generate a CT image. The detector 140 may be in a form of detector array structure.

As shown in FIG. 2, in this embodiment, the ray source 130 and the detector 140 of the scanning device are both arranged on the rotatable portion 5. When the object to be inspected passes through an inspection channel, the ray source 130 can emit X-rays to penetrate the object to be inspected, and the X-rays that penetrate the object to be inspected can reach the detector 140 arranged opposite to the ray source 130, thereby forming a CT image. The object to be inspected is placed on the inspection channel so that a section of the object is scanned by the scanning device during each scanning. Once scanning of this section is completed, an orientation of the object to be inspected on the inspection channel is changed by a traction device of the CT inspection system to perform scanning of a next section of the object. It is continued until scanning of the entire object to be inspected is completed. For example, the object to be inspected may be a small item (such as luggage), a large cargo (such as a container), a vehicle or an airplane, etc. The specific type of the object to be inspected is not specifically limited in the embodiments of the present disclosure.

In the embodiment of the present disclosure, each supporting device 1 may comprise a plurality of rotating wheels 13, at least one rotating wheel 13 of at least one supporting device 1 may be used as a driving wheel, and the driving wheel can drive the rotating portion 5 to rotate around a rotation axis AX1. Other rotating wheels 13 of the supporting device 1 may be used as driven wheels, and the rotatable portion 5 may apply a friction force to the driven wheels during rotation to drive the driven wheels to rotate. During rotation of the rotatable portion 5, the plurality of rotating wheels 13 of the plurality of supporting devices 1, whether used as driving wheels or as driven wheels, can play a role of supporting the rotatable portion 5. That is, in the CT machine provided by the embodiment of the present disclosure, a plurality of supporting wheels distributed at intervals are arranged for the rotatable portion 5 to realize a distributed multi-point rotary support for the rotatable portion, which can avoid the problem caused by employing a single large bearing as a rotary support, increase the rigidity of the system, and improve the stability of the CT imaging system during high-speed rotation.

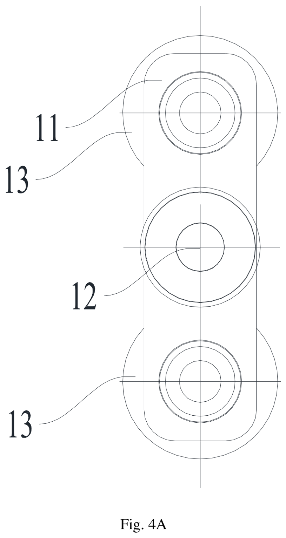

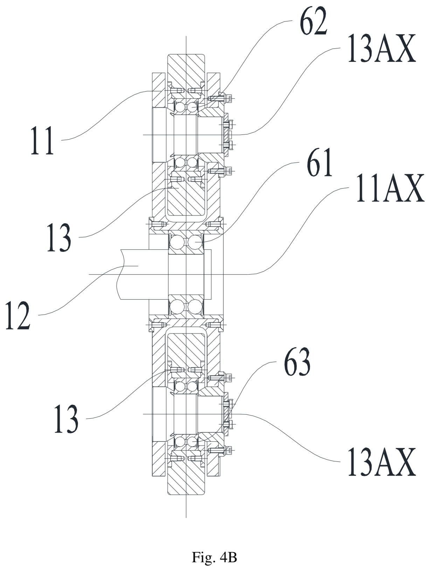

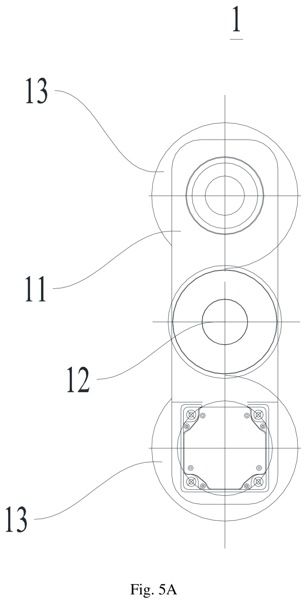

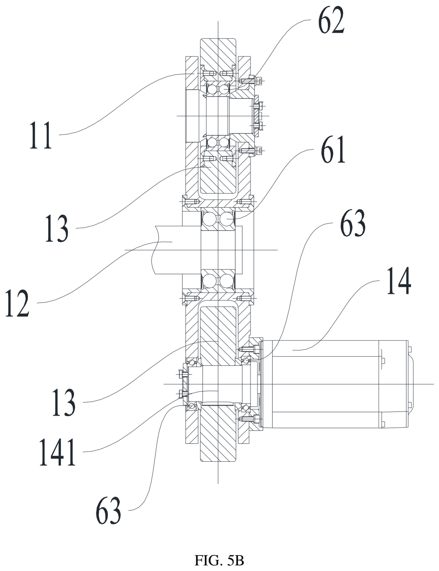

FIG. 4A is an enlarged view of a supporting device of a CT machine according to some exemplary embodiments of the present disclosure. FIG. 4B is a side view of the supporting device shown in FIG. 4A. FIG. 5A is an enlarged view of a supporting device of a CT machine according to some exemplary embodiments of the present disclosure, at least one rotating wheel included in the supporting device serves as a driving wheel. FIG. 5B is a side view of the supporting device shown in FIG. 5A.

Referring to FIG. 4A combined with FIG. 4B, in some exemplary embodiments of the present disclosure, at least one supporting device 1 of the plurality of supporting devices 1 may have a "seesaw" structure. Specifically, at least one supporting device 1 may include a pivotable arm 11, a pivot 12, and at least two rotating wheels 13. The pivotable arm 11 is pivotally connected to the first frame 110 through the pivot 12, at least two rotating wheels 13 are arranged on the pivotable arm 11 and located on two sides of the pivot axis of the pivotable arm 11 respectively, at least two rotating wheels 13 serve as driven wheels, and the rotatable portion 5 can apply a friction force to the driven wheels 13 during rotation to drive the driven wheels 13 to rotate. In the embodiment of the present disclosure, by designing the supporting device 1 as a "seesaw" structure, during rotation of the rotatable portion 5, each supporting device 1 can adaptively support the rotatable portion 5. That is, based on contact, rotation, etc. of support points, the pivotable arms 11 of the supporting devices 1 can adaptively pivot, and automatically distribute a support force given by the rotating wheels 13 to the rotatable portion 5, so as to achieve a better support effect on the rotatable portion.

Referring to FIG. 5A combined with FIG. 5B, in some exemplary embodiments of the present disclosure, at least one supporting device 1 of the plurality of supporting devices 1 can perform a dual function of driving and supporting the rotatable portion 5. The main difference between the structure of the supporting device 1 that performs a dual function of driving and supporting the rotatable portion 5 and the structure of the supporting device 1 that plays a role of supporting the rotatable portion 5 lies in that the supporting device 1 that performs a dual function of driving and supporting the rotatable portion 5 is connected with components such as a driving motor. Except for this, the two supporting devices are substantially same in structure. The substantially same structures and components are denoted by the same reference numerals herein. Specifically, at least one supporting device 1 may include a pivotable arm 11, a pivot 12, a driving motor 14 and at least two rotating wheels 13, the pivotable arm 11 is pivotally connected to the first frame 110 through the pivot 12, at least two rotating wheels 13 are arranged on the pivotable arm 11 and located on two sides of the pivot axis of the pivotable arm 11 respectively, at least one rotating wheel of the at least two rotating wheels 13 serves as a driving wheel, which is connected to the driving motor 14 and can rotate under the driving of the driving motor 14. In the embodiment of the present disclosure, the supporting device 1 that performs a dual function of driving and supporting the rotatable portion 5 also has a "seesaw" structure, so that during rotation of the rotatable portion 5, this supporting device 1 can also adaptively support the rotatable portion 5.

In the embodiment of the present disclosure, by means of a distributed and adaptive multi-point support manner, the rotation stability of the ray source and the detector is effectively improved, which helps to improve the imaging quality of the CT machine, increase the detection accuracy, and also extend the service lives of the structural components of the CT machine.

In the embodiment of the present disclosure, the transmission process may include: the driving motor 14 drives at least one rotating wheel 13 as a driving wheel to rotate, the at least one rotating wheel 13 serving as the driving wheel drives the rotatable portion 5 to rotate by means of friction transmission, and the rotatable portion 5 drives a plurality of rotating wheels 13 as driven wheels to rotate by means of friction transmission. During rotation of the rotatable portion 5, the at least one rotating wheel 13 serving as the driving wheel drives and supports the rotatable portion 5, and the plurality of rotating wheels 13 serving as driven wheels support the rotatable portion 5.

In the embodiment of the present disclosure, each supporting device 1 may include at least two rotating wheels 13, for example, a supporting device 1 may include two rotating wheels 13. However, the embodiment of the present disclosure is not limited thereto, for example, in other embodiments, a supporting device 1 may include a larger number of rotating wheels 13, for example, a supporting device 1 may include a multi-stage "seesaw" structure.

Continuing to refer to FIG. 4A to Fig. 5B, each supporting device 1 may further include multiple bearings, for example, the multiple bearings may include a first bearing 61, a second bearing 62, and a third bearing 63. In a supporting device 1, the pivotable arm 11 may be connected to the pivot 12 through the first bearing 61, and the two rotating wheels 13 are connected to the pivotable arm 11 through the second bearing 62 and the third bearing 63 respectively. That is, the pivotable arm 11 is rotatably supported on the pivot 12 by means of the first bearing 11, and the two rotating wheels 13 may be rotatably supported on the pivotable arm 11 by means of the second bearing 62 and the third bearing 63 respectively. In the embodiment of the present disclosure, with the distributed multi-point support manner, the rotary support mode with a single large bearing in a CT machine of the related art is changed to a rotary support mode with multiple distributed small bearings. Compared with a large bearing, a small bearing involves lower manufacturing difficulty and cost, and is more convenient to maintain and replace.

Further, referring to FIG. 5A and FIG. 5B, the driving motor 14 is directly connected to the driving wheel 13. Specifically, the driving motor 14 includes a power output shaft 141, and the driving wheel 13 is directly connected to the power output shaft 141. For example, in a supporting device 1, two third bearings 63 are disposed, the two third bearings 63 and the driving wheel 13 are sleeved on the power output shaft 141 of the driving motor 14, respectively, and the two third bearings 63 are located on two sides of the driving wheel 13 respectively.

In an embodiment of the present disclosure, the power output shaft 141 of the driving motor 14 is arranged in parallel to the pivot 12 of the supporting device 1, that is, the power output shaft 141 of the driving motor 14 is parallel to the pivot axis of the pivotable arm 11 and parallel to the rotation axes of the two rotating wheels 13. This arrangement helps to smoothly transmit the power of the driving motor to the driving wheel, and the driving motor does not increase the size of the entire supporting device along the circumferential direction of the rotatable portion, which is conducive to the spatial layout of the components of the entire CT machine.

Referring to FIG. 2, FIG. 4A, FIG. 5A and FIG. 5B, in the supporting device 1, orthographic projections of the pivot axis 11AX of the pivotable arm 11 and respective rotation axes 13AX of the two rotating wheels 13 on a first plane P1 are substantially located on the same straight line, the first plane P1 is a plane perpendicular to the rotation axis AX1 of the rotatable portion 5. For example, in FIG. 2, the first plane P1 is a plane where the paper surface is located. In FIG. 2, one pivot center and two rotation centers of the same supporting device 1 are located on the same straight line, which helps to improve the support effect of the supporting device 1 on the rotatable portion 5. At the same time, it further helps to make the structure of the supporting device 1 compact, the size of the supporting device 1 along the radial direction of the rotatable portion 5 can be reduced, which is further conducive to the spatial layout of the components of the entire CT machine.

For example, in the embodiment of the present disclosure, in the supporting device 1, vertical distances from the respective rotation axes 13AX of the two rotating wheels 13 to the pivot axis 11AX of the pivotable arm 11 are substantially equal to each other, that is, the distances from the orthographic projections of the respective rotation axes 13AX of the two rotating wheels 13 on the first plane P1 to the orthographic projection of the pivot axis 11AX of the pivotable arm 11 on the first plane P1 are equal to each other. Such a design is beneficial to reasonable distribution of the support force of the rotating wheels.

For another example, an orthographic projection of the driving motor 14 on the first plane P1 falls within the orthographic projection of the pivotable arm 11 on the first plane P1. In this way, the driving motor will not increase the size of the entire supporting device along the circumferential direction of the rotatable portion, which is conducive to the spatial layout of the components of the entire CT machine.

In the embodiment of the present disclosure, the rotatable portion 5 provides a mounting base for the scanning device and drives the scanning device to rotate so as to realize rotational scanning of the object to be inspected. The internal space of the rotatable portion 5 can form an inspection channel 53, and the object to be inspected can pass through the inspection channel 53 along a specified transmission direction, the specified transmission direction may be parallel to the rotation axis AX1 of the rotatable portion 5.

As shown in FIG. 3, the CT machine may comprise at least two conveying devices 91 and 92. For example, the conveying device 91 may be located upstream of the scanning device to convey the object to be inspected to the scanning device for CT scanning. The conveying device 92 may be located downstream of the scanning device so as to output the object to be inspected that has finished CT scanning.

For example, the conveying devices 91 and 92 may include a belt conveyor, but the embodiment of the present disclosure is not limited thereto, and other transmission manners, such as screws, synchronous belts, rollers, chain drives, etc., can be used instead of belt drives.

Referring to FIG. 2 and FIG. 3, the rotatable portion 5 may include a rotatable body 51 and at least one rotatable track 52, the scanning device is arranged on the rotatable body 51, and each supporting device 1 is at least partially in contact with at least one rotatable track 52.

For example, the rotatable body 51 may be in an annular shape, which is more convenient for the opposite arrangement of the ray source 130 and the detector 140 of the scanning device on the one hand, and also more convenient for rotation control on the other hand. However, the embodiment of the present disclosure is not limited thereto, and the rotatable body 51 only needs to be convenient for arranging the scanning device and the scanning channel.

In some exemplary embodiments of the present disclosure, the rotatable track 52 may be in an annular shape, and the rotating wheel 13 of each supporting device 1 is partially in contact with at least one annular rotatable track 52 to drive the rotatable track 52 to rotate or rotate under the driving of the rotatable track 52. By means of the rotatable track 52, the wear on the rotatable body 51 can be reduced. For example, the rotatable track 52 may be made of a material that has been heat-treated to improve its strength, hardness and wear resistance.

In the embodiment of the present disclosure, the number of rotatable tracks 52 may be one, or two or more. When there are two rotatable tracks 52, the two rotatable tracks 52 may be arranged successively at intervals along the rotation axis AX1 of the rotatable portion 5 to form a double-track support structure. The rotatable body 51 is sandwiched between the two rotatable tracks 52, so that a more stable support for the rotatable body 51 can be achieved based on a relatively simple structure, and the center of gravity of the rotatable portion of the CT machine is located between the two rotatable tracks 52, thereby enhancing the operation stability. In other words, with such a double-track support structure, the rotation stability of the CT machine can be further improved based on a relatively simple structure, so as to obtain a more stable and clear CT image.

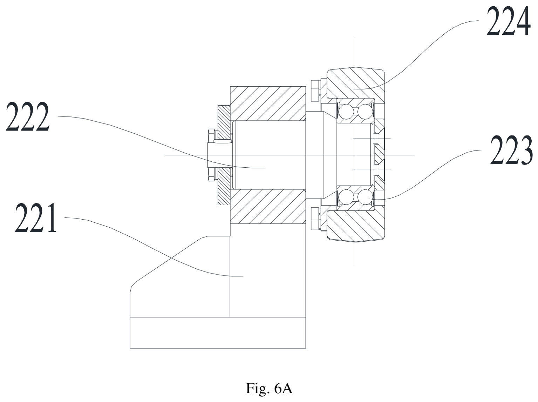

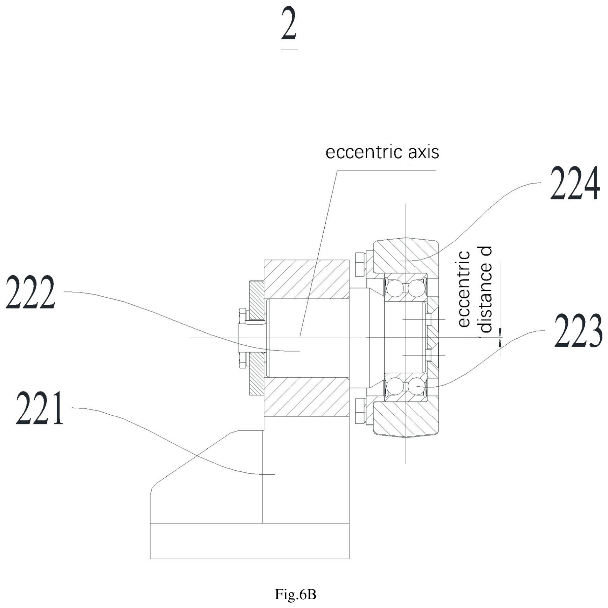

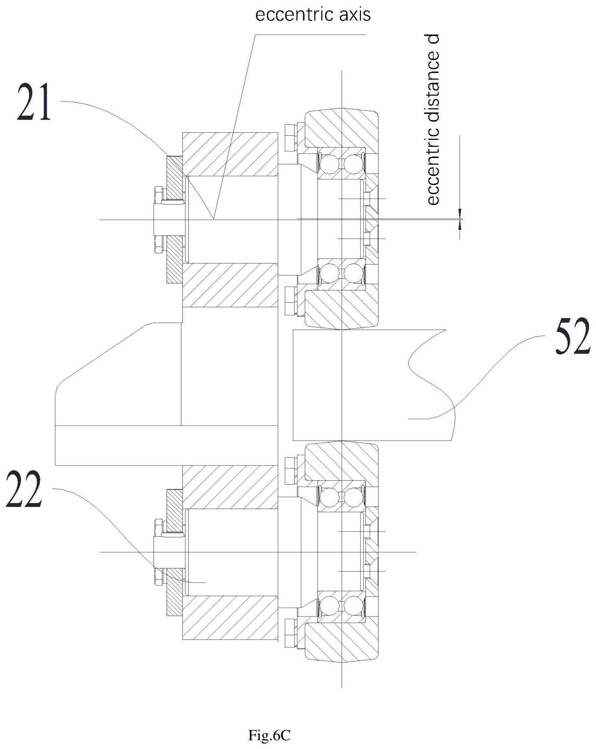

FIG. 6A is a partial enlarged view of an axial limiting mechanism of a CT machine according to some exemplary embodiments of the present disclosure. FIG. 6B is a partial enlarged view of an axial limiting mechanism of a CT machine according to another exemplary embodiment of the present disclosure. FIG. 6C is a partial enlarged view of an axial limiting mechanism of a CT machine according to a further exemplary embodiment of the present disclosure.

Referring to FIG. 2, FIG. 3, FIG. 6A and FIG. 6B, the CT machine 100 may comprise an axial limiting mechanism 2, which is used to limit movements of the rotatable portion 5 along a first direction D1 and a second direction D2, the first direction D1 and the second direction D2 are both parallel to the rotation axis AX1 of the rotatable portion 5, and the first direction D1 is opposite to the second direction D2. In the embodiment shown in FIG. 3, the first direction D1 and the second direction D2 may be left-right directions, for example, the first direction D1 may be a direction from left to right, and the second direction D2 may be a direction from right to left.

In some exemplary embodiments, the axial limiting mechanism 2 may include: a first axial limiting device 21, which is used to limit a movement of the rotatable portion 5 along the first direction D1; and a second axial limiting device 22, which is used to limit a movement of the rotatable portion 5 along the second direction D2.

In the embodiment of the present disclosure, by arranging the axial limiting mechanism, an axial vibration of the rotatable portion of the CT machine during high-speed rotation can be effectively alleviated or even suppressed. Accordingly, an axial vibration of the CT scanning device (i.e., the imaging system) can be effectively alleviated or even suppressed, an axial vibration frequency of the CT scanning device (i.e., the imaging system) is reduced, and the overall noise of the CT machine is also decreased.

For example, in the direction parallel to the rotation axis AX1, the first axial limiting device 21 and the second axial limiting device 22 are arranged on two sides of at least one rotatable track 52 respectively.

By way of example, in the direction parallel to the rotation axis AX1, the first axial limiting device 21 is arranged on a side of one rotatable track of the two rotatable tracks 52 facing away from the rotatable body 51, and the second axial limiting device 22 is arranged on a side of the other rotatable track of the two rotatable tracks 52 facing away from the rotatable body 51. As shown in FIG. 3, the two rotatable tracks 52 are arranged on the left and right sides of the rotatable body 51 respectively, the first axial limiting device 21 may be arranged on the right side of the rotatable track 52 on the right, and the second axial limiting device 22 may be arranged on the left side of the rotatable track 52 on the left.

By way of example, as shown in FIG. 6C, in the direction parallel to the rotation axis AX1, the first axial limiting device 21 and the second axial limiting device 22 may be arranged on two sides of the same rotatable track of the two rotatable tracks 52 respectively. For example, the first axial limiting device 21 and the second axial limiting device 22 may be arranged respectively on two sides of a rotatable track 52 on the left or on the right.

In an embodiment of the present disclosure, one of the first axial limiting device 21 and the second axial limiting device 22 is a fixed distance limiting mechanism, and the other is a variable distance limiting mechanism. For the fixed distance limiting mechanism, the axial distance from a portion of this limiting mechanism that is in contact or will be in contact with the rotatable track 52 to the rotatable track 52 is fixed; for the variable distance limiting mechanism, the axial distance from a portion of the limiting mechanism that is in contact or will be in contact with the rotatable track 52 to the rotatable track 52 is variable. That is to say, by using the fixed distance limiting mechanism and the variable distance limiting mechanism in combination, the axial limiting mechanism can be adapted to various different application scenes, avoiding frequent adjustment of the axial limiting mechanism due to manufacturing tolerances, installation errors, etc.

One of the first axial limiting device 21 and the second axial limiting device 22 may include an axial pressure roller, which may be a fixed distance limiting mechanism. During rotation of the axial pressure roller, a minimum distance between an outer circumferential surface of the axial pressure roller and an end face of the rotatable track facing the first direction along the first direction D1 remains unchanged. For example, the first axial limiting device 21 may include an axial pressure roller. The axial pressure roller is arranged close to an end face of one of the rotatable tracks 52 facing the first direction D1. Referring to FIG. 3, the axial pressure roller on the right is arranged close to an end face (i.e., a right end face) of the rotatable track 52 on the right facing the first direction D1.

The other of the first axial limiting device 21 and the second axial limiting device 22 may include an eccentric axial pressure roller, which may be a variable distance limiting mechanism. During rotation of the eccentric axial pressure roller, a minimum distance between an outer circumferential surface of the eccentric axial pressure roller and an end face of the rotatable track facing the second direction along the second direction is variable. For example, the second axial limiting device 22 may include an eccentric axial pressure roller. The eccentric axial pressure roller is arranged close to an end face of the other rotatable track 52 facing the second direction D2. Referring to FIG. 3, the eccentric axial pressure roller on the left is arranged close to an end face (i.e., a left end face) of the rotatable track 52 on the left facing the second direction D2.

In some embodiments, referring to FIG. 6C, one of the first axial limiting device 21 and the second axial limiting device 22 may include an axial pressure roller, and the other includes an eccentric axial pressure roller. The axial pressure roller and the eccentric axial pressure roller may be arranged close to an end face facing the first direction D1 and an end face facing the second direction D2 of the same rotatable track 52, respectively, that is, the axial pressure roller and the eccentric axial pressure roller may act on the same rotatable track 52.

Referring to FIG. 6A, the axial pressure roller may include a roller seat 211, a roller axle 212, a roller bearing 213 and a first pressure roller element 214. The roller seat 211 may be fixedly connected to the first frame 110, the roller axle 212 is arranged on the roller seat 211, and the first pressure roller element 214 is arranged on the roller axle 212 through the roller bearing 213. The central axis of the first pressure roller element 214 coincides with the central axis of the roller axle 212. The first pressure roller element 214 can rotate on the roller axle 212. At least a part of the outer circumferential surface of the first pressure roller element 214 faces the end face of the rotatable track 52 facing the first direction D1 (as shown in FIG. 3).

Referring to FIG. 6B, the eccentric axial pressure roller may include a roller seat 221, a roller axle 222, a roller bearing 223, and a second pressure roller element 224. The roller seat 221 is fixedly connected to the first frame 110, the roller axle 222 is arranged on the roller seat 221, and the second pressure roller element 224 is arranged on the roller axle 222 through the roller bearing 223. There is an eccentricity between the central axis of the second pressure roller element 224 and the central axis of the roller axle 222, such as an eccentric distance d. The second pressure roller element 224 can rotate eccentrically on the roller axle 222, and at least a part of the outer circumferential surface of the second pressure roller element 224 faces the end face of the rotatable track 52 facing the second direction D2 (as shown in FIG. 3).

Referring to FIG. 6C, the axial pressure roller and the eccentric axial pressure roller may share a roller seat, so that the axial pressure roller and the eccentric axial pressure roller constitute a pressure roller group.

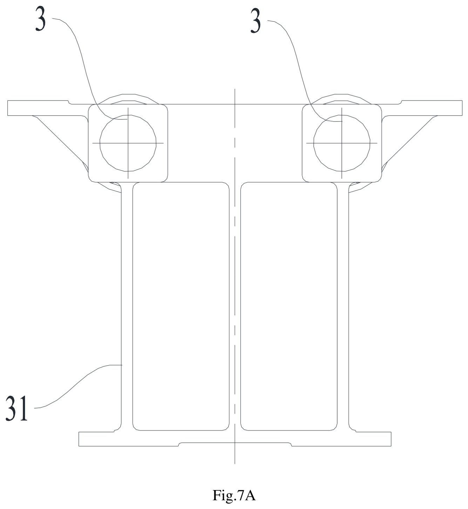

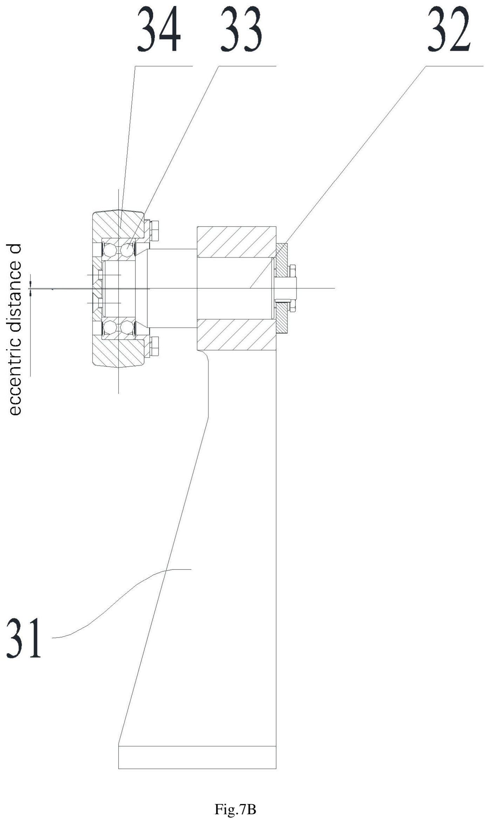

FIG. 7A is a partial enlarged view of a radial limiting mechanism of a CT machine according to some exemplary embodiments of the present disclosure. FIG. 7B is a side view of the radial limiting mechanism shown in FIG. 7A. In an embodiment of the present disclosure, the plurality of supporting devices 1 described above are also used to limit a movement of the rotatable portion 5 along a first radial direction D3. The CT machine 100 may further comprise a radial limiting mechanism 3 arranged on the first frame 110, and the radial limiting mechanism 3 is used to limit a movement of the rotatable portion 5 along a second radial direction D4. The first radial direction D3 and the second radial direction D4 are both parallel to the radial direction of the rotatable portion 5 and opposite to each other.

Here, for the convenience of description, the direction from top to bottom in the view of FIG. 2 can be taken as the first radial direction D3, and the direction from bottom to top in the view of FIG. 2 can be taken as the second radial direction D4.

As described above, the plurality of supporting devices 1 pivotally support the rotatable portion 5, so that the rotatable portion 5 can be adaptively supported. Correspondingly, the radial limiting mechanism 3 can limit a movement of the rotatable portion 5 in another radial direction. In the embodiment of the present disclosure, under the combined effect of plurality of supporting devices and the radial limiting mechanism 3, a radial vibration of the rotatable portion of the CT machine during high-speed rotation can be effectively alleviated or even suppressed. Accordingly, a radial vibration of the CT scanning device (i.e., the imaging system) can be effectively alleviated or even suppressed, an axial vibration frequency of the CT scanning device (i.e., the imaging system) is reduced, and the overall noise of the CT machine is also decreased.

Referring to FIG. 2, FIG. 7A and FIG. 7B, the radial limiting mechanism 3 faces an inner circumferential surface of the annular rotatable track 52. Specifically, the radial limiting mechanism 3 includes a radially eccentric pressure roller, which can rotate. During rotation of the radially eccentric pressure roller, a minimum distance between an outer circumferential surface of the radially eccentric pressure roller and the inner circumferential surface of the rotatable track 52 along the second radial direction D4 is variable. By arranging a variable distance limiting mechanism in the radial direction, the radial limiting mechanism can be adapted to various different application scenes, avoiding frequent adjustment of the radial limiting mechanism due to manufacturing tolerances, installation errors, etc.

For example, the radially eccentric pressure roller may include a roller seat 31, a roller axle 32, a roller bearing 33 and a first radial pressure roller element 34. The roller seat 31 is fixedly connected to the first frame 110, the roller axle 32 is arranged on the roller seat 31, and the first radial pressure roller element 34 is arranged on the roller axle 32 through the roller bearing 33. There is an eccentricity between central axis of the first radial pressure roller element 34 and the central axis of the roller axle 32, the first radial pressure roller element 34 can rotate eccentrically on the roller axle 32, and at least a part of the outer circumferential surface of the first radial pressure roller element 34 faces the inner circumferential surface of the rotatable track 52.

For example, the radially eccentric pressure roller may include two roller axles 32, two roller bearings 33 and two first radial pressure roller elements 34, and the central axes of the two roller axles 32 are substantially located at the same horizontal height.

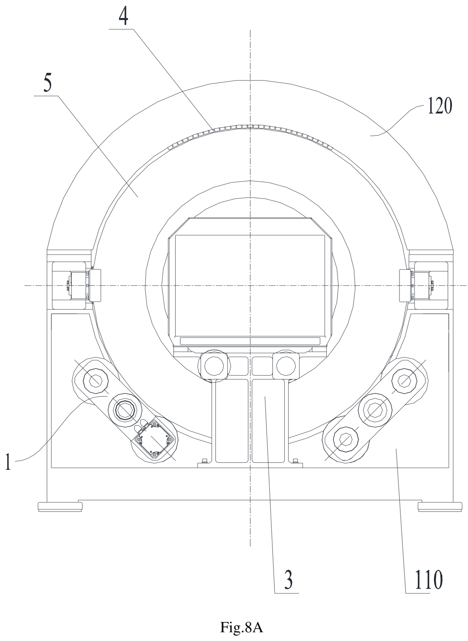

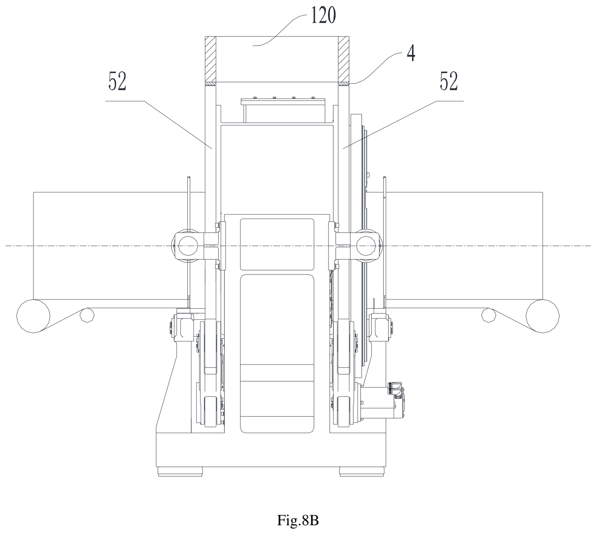

FIG. 8A is a front view of a CT machine according to some other exemplary embodiments of the present disclosure, and FIG. 8B is a side view of a CT machine according to some other exemplary embodiments of the present disclosure. The CT machine shown in FIG. 8A and FIG. 8B may comprise all the structures, components and elements of the CT machine described above. The differences will be mainly described below.

Referring to FIG. 8A and FIG. 8B, the CT machine 100 may further comprise: a second frame 120, which is arranged opposite to the first frame 110; and a magnetic device 4, which is arranged on at least one of the first frame 110 and the second frame 120. The magnetic device 4 provides a magnetic force to the rotatable portion 5 when the rotatable portion 5 rotates, and at least some component force of the magnetic force is opposite to the direction of the gravity of the rotatable portion 5.

In the embodiment of the present disclosure, by providing the magnetic device 4, the rotational weight of the rotatable portion 5 can be appropriately decreased, and the radial impact force on the scanning device can be effectively reduced.

Referring to FIG. 8A and FIG. 8B, the magnetic device 4 may be arranged on the second frame 120, and the magnetic device 4 provides a magnetic attraction force to the rotatable portion 5 when the rotatable portion 5 rotates.

For example, the magnetic device 4 may include a plurality of permanent magnets or electromagnets, which are arranged on the second frame 120 in a spaced manner along the rotation direction of the rotatable portion 5 (i.e., the circumferential direction of the rotatable portion 5). The rotatable track 52 of the rotatable portion 5 may include a magnetic material, or a magnetic portion composed of a magnetic material is provided on the outer circumferential surface of the rotatable track 52. In this way, the plurality of permanent magnets or electromagnets on the second frame 120 can generate a magnetic attraction effect on the rotatable track 52, thereby appropriately decreasing the rotation weight of the rotatable portion 5 and effectively reducing the radial impact force on the scanning device.

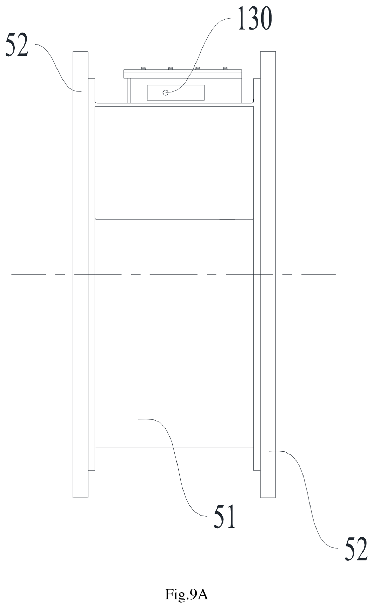

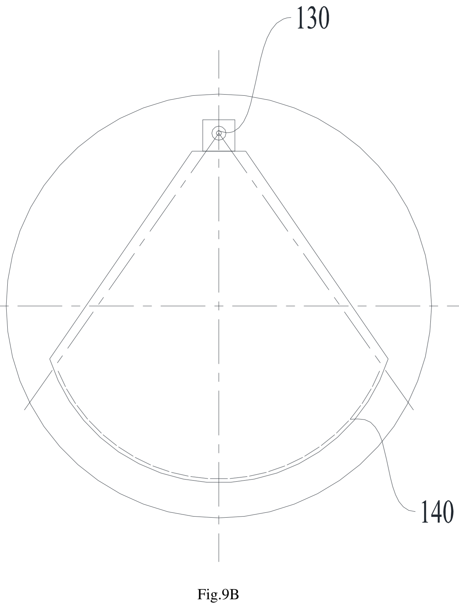

FIG. 9A illustrates an installation state of a scanning device in a CT machine according to an embodiment of the present disclosure. FIG. 9B illustrates a relative position of a scanning device in a CT machine according to an embodiment of the present disclosure.

Referring to FIG. 9A and FIG. 9B, in the embodiment of the present disclosure, the scanning device including the ray source 130 and the detector 140 is arranged between the two rotatable tracks 52, and thus the scanning device has a high rotation stability, avoiding various problems resulting from cantilever installation.

In an embodiment of the present disclosure, the detector 140 may exhibit an arc shape centered on the corresponding ray source 130. For example, the detector 140 adopts a detector array structure, and multiple detectors are arranged in an array on a detection arm, and the detection arm exhibits an arc shape centered on the ray source 130. Since the detector 140 is configured as an arc-shaped curve centered on the ray source 130, the distances from different portions of the entire detector 140 to the ray source 130 are the same, that is, the distances from the detectors in the detector array to the ray source 130 are the same. Compared with the case of unequal source-detector distances (for example, the detector 140 exhibits an arc shape centered on the center of the rotatable portion 5), the case of equal source-detector distances is more convenient for imaging, and at the same time, subsequent related calculation and analysis will also be simpler and more convenient, which helps to improve the inspection accuracy.

In the embodiment of the present disclosure, two supporting devices on two sides of the rotation axis are arranged below the same rotatable track 52, so that the two supporting devices can support a portion of the rotatable portion 5 corresponding to a respective rotatable track 52 more stably, and the two supporting devices can act on the rotatable track 52 more efficiently and stably, thereby supporting the rotatable portion 5 to rotate more efficiently and stably.

In the description of this specification, descriptions with reference to the terms "an embodiment", "some embodiments", "exemplary embodiments", "examples", "specific examples" or "some examples", etc. mean that the specific features, structures, materials or characteristics described in combination with the embodiment or example are included in at least one embodiment or example of the present disclosure. In this specification, the schematic representations of the above terms do not necessarily refer to the same embodiment or example. Moreover, the specific features, structures, materials or characteristics described can be combined in any one or more embodiments or examples in a suitable manner.

Although the embodiments of the present disclosure have been illustrated and described, those ordinarily skilled in the art can appreciate that various changes, modifications, substitutions and variations can be made to these embodiments without departing from the principle and purpose of the present disclosure, and the scope of the present disclosure is defined by the claims and their equivalents. It will be appreciated by those skilled in the art that the features described in the various embodiments and/or claims of the present disclosure may be combined and/or united in a variety of ways, even if such combinations or unions are not explicitly described in the present disclosure. In particular, the features described in the various embodiments and/or claims of the present disclosure may be combined and/or united in a variety of ways without departing from the spirit and teaching of the present disclosure. All of these combinations and/or unions fall within the scope of the present disclosure.

## Claims

1. A CT machine, **characterized by** comprising:
a first frame;
a plurality of supporting devices arranged on the first frame, each said supporting device comprising a plurality of rotating wheels, at least one rotating wheel of at least one supporting device serving as a driving wheel;
a rotatable portion capable of rotating around a rotation axis when driven by the driving wheel, and the rotatable portion being jointly supported by the plurality of supporting devices during rotation of the rotatable portion;
a scanning device comprising a ray source and a detector, the ray source and the detector being both arranged on the rotatable portion, and the ray source and the detector being arranged oppositely along a radial direction of the rotatable portion; and
an axial limiting mechanism for limiting movements of the rotatable portion along a first direction and a second direction, the first direction and the second direction being both parallel to the rotation axis, and the first direction being opposite to the second direction,
wherein the plurality of supporting devices are further configured to limit a movement of the rotatable portion along a first radial direction, the CT machine further comprises a radial limiting mechanism arranged on the first frame, the radial limiting mechanism is configured to limit a movement of the rotatable portion along a second radial direction, the first radial direction and the second radial direction are both parallel to the radial direction of the rotatable portion and opposite to each other.

2. The CT machine according to claim 1, **characterized in that** the axial limiting mechanism comprises:
a first axial limiting device for limiting a movement of the rotatable portion along the first direction; and
a second axial limiting device for limiting a movement of the rotatable portion along the second direction.

3. The CT machine according to claim 2, **characterized in that** the rotatable portion comprises a rotatable body and at least one rotatable track, the scanning device is arranged on the rotatable body, and
the first axial limiting device and the second axial limiting device are arranged on two sides of the at least one rotatable track respectively in a direction parallel to the rotation axis.

4. The CT machine according to claim 2, **characterized in that** the rotatable portion comprises two rotatable tracks, the rotatable body is sandwiched between the two rotatable tracks in a direction parallel to the rotation axis of the rotatable portion, and
in a direction parallel to the rotation axis, the first axial limiting device is arranged on a side of one rotatable track of the two rotatable tracks facing away from the rotatable body, and the second axial limiting device is arranged on a side of the other rotatable track of the two rotatable tracks facing away from the rotatable body.

5. The CT machine according to claim 2, **characterized in that** the rotatable portion comprises two rotatable tracks, the rotatable body is sandwiched between the two rotatable tracks in a direction parallel to the rotation axis of the rotatable portion, and
the first axial limiting device and the second axial limiting device are arranged on two sides of a same rotatable track of the two rotatable tracks respectively in a direction parallel to the rotation axis.

6. The CT machine according to claim 3, **characterized in that** the first axial limiting device comprises an axial pressure roller, and the axial pressure roller is arranged close to an end face of one of the at least one rotatable track facing the first direction.

7. The CT machine according to claim 6, **characterized in that** the second axial limiting device comprises an eccentric axial pressure roller, and the eccentric axial pressure roller is arranged close to an end face of another rotatable track of the at least one rotatable track facing the second direction.

8. The CT machine according to claim 3, **characterized in that** the first axial limiting device comprises an axial pressure roller, the second axial limiting device comprises an eccentric axial pressure roller, and the axial pressure roller and the eccentric axial pressure roller are arranged close to an end face facing the first direction and an end face facing the second direction of a same rotatable track of the at least one rotatable track, respectively.

9. The CT machine according to claim 8, **characterized in that**, during rotation of the axial pressure roller, a minimum distance along the first direction between an outer circumferential surface of the axial pressure roller and the end face of the rotatable track facing the first direction remains unchanged.

10. The CT machine according to claim 8, **characterized in that**, during rotation of the eccentric axial pressure roller, a minimum distance along the second direction between an outer circumferential surface of the eccentric axial pressure roller and the end face of the rotatable track facing the second direction is variable.

11. The CT machine according to any one of claims 6 to 10, **characterized in that** the axial pressure roller comprises a roller seat, a roller axle, a roller bearing and a first pressure roller element, the roller seat is fixedly connected to the first frame, the roller axle is arranged on the roller seat, the first pressure roller element is arranged on the roller axle through the roller bearing, a central axis of the first pressure roller element coincides with a central axis of the roller axle, the first pressure roller element is capable of rotating on the roller axle, and at least a part of an outer circumferential surface of the first pressure roller element faces the end face of the rotatable track facing the first direction.

12. The CT machine according to any one of claims 7 to 10, **characterized in that** the eccentric axial pressure roller comprises a roller seat, a roller axle, a roller bearing and a second pressure roller element, the roller seat is fixedly connected to the first frame, the roller axle is arranged on the roller seat, the second pressure roller element is arranged on the roller axle through the roller bearing, there is an eccentricity between a central axis of the second pressure roller element and a central axis of the roller axle, the second pressure roller element is capable of rotating eccentrically on the roller axle, and at least a part of an outer circumferential surface of the second pressure roller element faces the end face of the rotatable track facing the second direction.

13. The CT machine according to any one of claims 7 to 10, **characterized in that** the axial pressure roller and the eccentric axial pressure roller share a roller seat, the axial pressure roller and the eccentric axial pressure roller constitute a pressure roller group.

14. The CT machine according to claim 1, **characterized in that** the rotatable portion comprises a rotatable body and at least one rotatable track, the scanning device is arranged on the rotatable body, and
the at least one rotatable track is an annular track, and the radial limiting mechanism faces an inner circumferential surface of the annular track.

15. The CT machine according to claim 1, **characterized in that** the radial limiting mechanism comprises a radially eccentric pressure roller capable of rotation, and during rotation of the radially eccentric pressure roller, a minimum distance along the second radial direction between an outer circumferential surface of the radially eccentric pressure roller and an inner circumferential surface of the rotatable track is variable.

16. The CT machine according to claim 15, **characterized in that** the radially eccentric pressure roller comprises a roller seat, a roller axle, a roller bearing and a first radial pressure roller element, the roller seat is fixedly connected to the first frame, the roller axle is arranged on the roller seat, the first radial pressure roller element is arranged on the roller axle through the roller bearing, there is an eccentricity between a central axis of the first radial pressure roller element and a central axis of the roller axle, the first radial pressure roller element is capable of rotating eccentrically on the roller axle, and at least a part of an outer circumferential surface of the first radial pressure roller element faces the inner circumferential surface of the rotatable track.

17. The CT machine according to claim 16, **characterized in that** the radially eccentric pressure roller comprises two roller axles, two roller bearings and two first radial pressure roller elements, and central axes of the two roller axles are substantially located at a same horizontal height.

18. The CT machine according to claim 1, **characterized in that** at least one supporting device of the plurality of supporting devices comprises a pivotable arm, a pivot, a driving motor and at least two rotating wheels, the pivotable arm is pivotally connected to the first frame through the pivot, the at least two rotating wheels are arranged on the pivotable arm and located on two sides of a pivot axis of the pivotable arm respectively, and
at least one of the at least two rotating wheels is a driving wheel, the driving motor is directly connected to the driving wheel, the driving wheel is capable of driving the rotatable portion to rotate around the rotation axis, the driving motor comprises a power output shaft parallel to the pivot.

19. The CT machine according to claim 18, **characterized in that** the at least one supporting device of the plurality of supporting devices comprises two rotating wheels, and
orthographic projections of the pivot axis of the pivotable arm and respective rotation axes of the two rotating wheels on a first plane are substantially located on a same straight line, wherein the first plane is a plane perpendicular to the rotation axis of the rotatable portion.

20. The CT machine according to claim 18 or 19, **characterized in that** the at least one supporting device of the plurality of supporting devices further comprises a first bearing, a second bearing and a third bearing, the pivot is connected to the first frame, the pivotable arm is connected to the pivot through the first bearing, and the two rotating wheels are connected to the pivotable arm through the second bearing and the third bearing respectively.

21. The CT machine according to claim 18 or 19, **characterized in that** the driving wheel is sleeved on the power output shaft, and two third bearings are sleeved on the power output shaft and located on two sides of the driving wheel respectively.

22. The CT machine according to claim 18 or 19, **characterized in that** an orthographic projection of the driving motor on the first plane falls within an orthographic projection of the pivotable arm on the first plane.

23. The CT machine according to claim 1, **characterized in that** at least one supporting device of the plurality of supporting devices comprises a pivotable arm, a pivot and at least two rotating wheels, the pivotable arm is pivotally connected to the first frame through the pivot, the at least two rotating wheels are arranged on the pivotable arm and located on two sides of a pivot axis of the pivotable arm respectively, the at least two rotating wheels are driven wheels, and the rotatable portion is capable of applying a friction force to the driven wheels during rotation to drive the driven wheels to rotate.

24. The CT machine according to claim 9, **characterized in that** the rotatable portion comprises a rotatable body and at least one rotatable track, the scanning device is arranged on the rotatable body, and each supporting device is at least partially in contact with the at least one rotatable track.

25. The CT machine according to claim 10, **characterized in that** the rotatable portion comprises two rotatable tracks, and the rotatable body is sandwiched between the two rotatable tracks in a direction parallel to the rotation axis of the rotatable portion.

26. The CT machine according to claim 6, **characterized in that** each rotatable track corresponds to two supporting devices, and the two supporting devices are symmetrically arranged on two sides of the rotation axis of the rotatable track.

27. The CT machine according to claim 1, **characterized in that** the CT machine further comprises:
a second frame arranged opposite to the first frame; and
a magnetic device arranged on at least one of the first frame and the second frame,
wherein the magnetic device is configured to provide a magnetic force to the rotatable portion when the rotatable portion rotates, and at least some component force of the magnetic force is opposite to a direction of a gravity of the rotatable portion.

28. The CT machine according to claim 27, **characterized in that** the magnetic device is arranged on the second frame, and the magnetic device is configured to provide a magnetic attraction force to the rotatable portion when the rotatable portion rotates.

29. The CT machine according to claim 28, **characterized in that** the magnetic device comprises a plurality of permanent magnets or electromagnets, and the plurality of permanent magnets or electromagnets are arranged on the second frame in a spaced manner along a rotation direction of the rotatable portion.

30. The CT machine according to claim 3, **characterized in that** the rotatable portion comprises a rotatable body and at least one rotatable track, the scanning device is arranged on the rotatable body, and
the rotatable track comprises a magnetic material, or a magnetic portion composed of a magnetic material is provided on an outer circumferential surface of the rotatable track.
